(19) Europäisches Patentamt

European Patent Office

Office européen des brevets

(11) **EP 2 040 869 B1**

## (12) FASCICULE DE BREVET EUROPEEN

(45) Date de publication et mention de la délivrance du brevet:
**06.01.2016 Bulletin 2016/01**

(21) Numéro de dépôt: **07804585.3**

(22) Date de dépôt: **10.07.2007**

(51) Int Cl.:
***B23H 9/06*** *(2006.01)*

(86) Numéro de dépôt international:
**PCT/IB2007/001934**

(87) Numéro de publication internationale:
**WO 2008/010044 (24.01.2008 Gazette 2008/04)**

(54) **PROCÉDÉ ET INSTALLATION DE MARQUAGE D'UN OBJET**

VERFAHREN UND ANLAGE ZUR MARKIERUNG EINES OBJEKTS

METHOD AND INSTALLATION FOR MARKING AN OBJECT

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **19.07.2006 CH 11632006**

(43) Date de publication de la demande:
**01.04.2009 Bulletin 2009/14**

(73) Titulaire: **L'Universite De Geneve**
**1204 Genève (CH)**

(72) Inventeurs:
- **CORS, Jorge**
  **1206 Genève (CH)**
- **FISCHER, Oystein**
  **1296 Coppet (CH)**
- **KUFFER, Olivier**
  **1218 Le Grand-Saconnex (CH)**
- **TRISCONE, Jean-Marc**
  **1228 Plan-les-Ouates (CH)**
- **DECROUX, Michel**
  **1292 Pregny-Chambesy (CH)**

(74) Mandataire: **Micheli & Cie SA**
**Rue de Genève 122**
**Case Postale 61**
**1226 Genève-Thônex (CH)**

(56) Documents cités:
**EP-A- 1 213 082     FR-A- 2 556 639**
**JP-A- 11 254 237     US-A- 4 735 678**

EP 2 040 869 B1

**Description**

La présente invention concerne un procédé de marquage d'un objet comprenant l'apposition d'au moins une marque d'identification à au moins un emplacement d'un substrat de cet objet.

De nombreuses techniques ont été mises en oeuvre pour garantir l'identité ou l'authenticité d'objets de valeur tels que des oeuvres d'art, des bijoux, des objets historiques. Un moyen pour combattre la contrefaçon frauduleuse de tels objets est l'insertion d'une plaquette d'identification comportant une marque avec un code spécifique. La présente invention a pour but d'améliorer les techniques connues et d'obtenir un procédé très sûr, pratiquement inviolable et qui permet l'apposition d'une marque d'identification directement sur l'objet à identifier ou à authentifier.

Elle a également pour but d'améliorer les techniques de marquage permettant l'identification d'objets pour assurer le suivi de pièces ou de lots de fabrication, le contrôle de qualité ou toute autre activité en rapport avec la traçabilité d'objets. Le document FR 2 556 639 décrit un procédé tel que présenté dans le préambule de la revendication 1.

L'invention est caractérisée à cet effet par les caractéristiques figurant à la revendication 1 et en particulier par le fait que l'on effectue ladite marque d'identification en utilisant au moins une décharge électrique entre une pointe métallique et ledit substrat pour obtenir au moins une empreinte présentant une nature physique et/ou une composition chimique particulières située audit emplacement, cette empreinte formant la marque d'identification étant repérable par des moyens de lecture.

Ces caractéristiques permettent d'obtenir un procédé d'identification ou d'authentification très sûr et fiable dans lequel les marques d'identification ou d'authentification peuvent être appliquées directement sur l'objet à authentifier.

De façon avantageuse, la pointe est séparée du substrat par une distance prédéterminée ou gap occupé par un milieu diélectrique dans lequel la décharge se produit pour former un canal de plasma ionisé.

Grâce à ces caractéristiques, on obtient des empreintes d'identification très précises et reproductibles.

Le milieu diélectrique est favorablement constitué par un liquide, un gel ou une pâte diélectrique dont les molécules contiennent comme éléments constitutifs un ou des éléments chimiques qui sont destinés à être implantés dans ledit substrat.

Favorablement, le milieu diélectrique comprend au moins une poudre à granulométrie plus fine que le gap mélangée à un liquide, un gel ou une pâte diélectrique, la composition chimique de la poudre étant choisie en fonction de la composition chimique du substrat de façon à obtenir une empreinte d'une composition chimique se distinguant de celle du substrat.

On obtient ainsi un microréacteur permettant de produire une grande variété d'empreintes d'identification pouvant être utilisées dans le cadre de nombreuses applications.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution.

La figure 1 montre un objet destiné à un procédé de marquage selon l'invention.

La figure 2 représente en détail la formation d'une microdécharge et d'une empreinte constituant une marque d'identification.

La figure 3A est une vue en plan d'une telle empreinte.

La figure 3B illustre deux mesures des compositions chimiques aux emplacements A et B de la figure 3A obtenues par microsonde ou par un équipement EDX.

Les figures 4a à 4d illustrent quatre types d'empreintes obtenues par des microdécharges.

La figure 5 représente une variante de microdécharge.

La figure 6 est une vue agrandie de la figure 1.

Les figures 7 et 8 illustrent des variantes du procédé de marquage utilisant un milieu diélectrique semi-solide sous forme de gel ou de pâte.

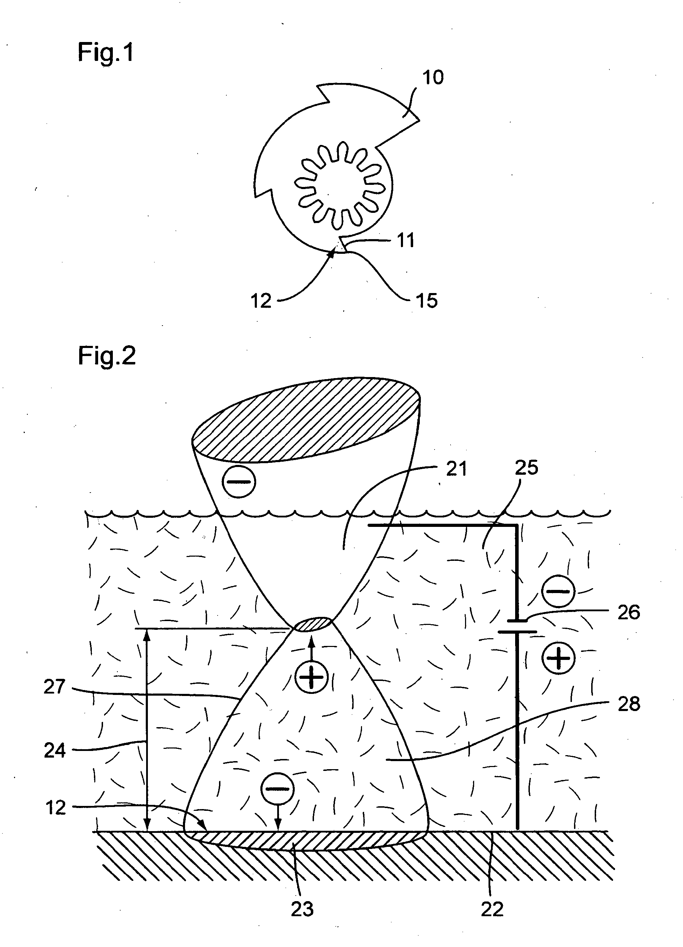

Selon un premier mode d'exécution de l'invention, une ou plusieurs marques d'identification ou d'authentification sont directement appliquées sur l'objet même à identifier ou à authentifier, tel que par exemple le limaçon d'horlogerie 10 illustrée à la figure 1.

Pour ce faire, on détermine sur cet objet au moins une caractéristique macroscopique 11, par exemple la dernière dent du limaçon.

Sur cette caractéristique macroscopique 11, on définit un endroit particulier, par exemple la pointe de la dent, qui servira de point de référence ou d'origine géométrique 15 d'un système de coordonnées.

On calculera ensuite les coordonnées $x_i$, $y_i$ des emplacements que devront occuper ces marques d'identification 12 à l'aide d'un algorithme de codage prédéterminé caractéristique d'un moyen d'identification attribué à l'objet. Puis on réalisera les marques d'identification à ces emplacements calculés.

Selon ce mode d'exécution, on applique en référence à la figure 2 pour les marques d'identification une technique de marquage utilisant des décharges électriques entre une pointe métallique très fine 21, comme celle d'un microscope à sonde locale, tel qu'un microscope à force atomique (AFM) ou un microscope à effet tunnel (STM), ou encore celle de l'extrémité d'un fil métallique fin et la surface du substrat 22, par exemple la surface de l'objet à identifier, dans le but de créer sur lesdits emplacements une empreinte 23 de composition chimique et/ou de nature physique particulière constituant une des marques d'identification 12. La pointe 21 et le substrat 22 sont séparés par une distance ou gap 24 de quelques microns, typiquement entre 1 μm et 200 μm. Ce gap est entièrement occupé par un milieu diélectrique composite 25, dans lequel la décharge 28, qui est une microdécharge, se produit.

Cette micro-décharge est obtenue en approchant la pointe 21 à un desdits emplacements prédéterminés de la surface du substrat 22, le tout étant immergé dans le milieu diélectrique. Au moyen d'un condensateur 26, d'un générateur ou de toute autre source de courant, on applique une tension comprise typiquement entre 1 et 400 V entre la pointe 21 et le substrat 22 pour produire un claquage ou une micro-décharge dans le milieu diélectrique. On assiste alors à la formation d'un canal de plasma ionisé conducteur 27 entre la pointe 21 et le substrat 22. Un courant électrique provenant de la décharge du condensateur 26 ou de toute autre source de courant peut traverser le plasma ionisé. L'énergie ainsi fournie contribue à la formation d'un micro-plasma confiné à des températures et des pressions très élevées.

Dans le schéma de la figure 2, la pointe 21 fait office de cathode et le substrat 22 d'anode. Ce schéma montre l'état de la décharge 28 immédiatement après le claquage du milieu diélectrique. Les polarités pourront cependant être inversées.

La masse du plasma, entourée par une enveloppe gazeuse ou bulle de gaz, grandit au cours de la décharge qui dure typiquement entre 1 et 800 microsecondes. Mais l'expansion radiale du plasma est fortement restreinte par la présence du milieu diélectrique, et l'énergie de la décharge se trouve concentrée dans un tout petit volume. Le plasma ultra-chaud rayonne de l'énergie vers la surface des électrodes provoquant la fonte du métal. La masse du plasma est en effet constituée de molécules du milieu diélectrique composite, pulvérisées et dissociées par l'énergie de la décharge. La température élevée du plasma provoque la fonte d'une surface ayant la forme d'un disque de quelques dizaines de microns de diamètre typiquement de 0,5 à 200 μm. Cependant la pression élevée du plasma limite l'évaporation de matière fondue provenant des électrodes. Ce mécanisme résulte dans la formation d'empreintes quasi-circulaires de métal fondu aux racines de l'arc. La dimension du disque de métal fondu est une fonction directe de la durée de la décharge.

Selon une variante du procédé, une fois l'arc établi la pointe peut être déplacée dans le plan pour faire des marques allongées voire des lignes ou d'autres trajectoires plus complexes, sans éteindre le courant à la façon d'un micro-chalumeau. Dans ce cas l'arc peut être maintenu pendant plusieurs secondes, voire davantage.

Dans le cas de la figure 2, la configuration avec une pointe cathodique et un substrat anodique est particulièrement favorable. L'anode subit très rapidement le bombardement électronique tout au début de la décharge ce qui provoque la fonte du métal. La cathode ne serait atteinte par les ions positifs, beaucoup plus lourds et moins mobiles, que bien plus tard et dans le pire des cas. D'autre part, comme la cathode émet des électrons, le diamètre du plasma sur la cathode est aussi beaucoup plus petit.

En contrôlant l'énergie de la décharge, sa durée, la distance de claquage et/ou le gap 24, et surtout la composition chimique et les additifs présents dans le milieu diélectrique 25, le plasma de la décharge est utilisé comme un microréacteur pour produire des empreintes de métal fondu avec des compositions chimiques autres que dans le substrat de base.

La pointe 21 peut être constituée de n'importe quel métal, mais de préférence un métal réfractaire comme le tungstène, l'iridium, le platine, le molybdène ou tout autre métal ayant un point de fusion élevé ou encore des propriétés d'émission thermoïonique. Le point de fusion élevé assure une usure minimum de la pointe, et les propriétés d'émission thermoïonique électroniques assurent l'efficacité de la décharge pour fondre l'anode, ainsi que le refroidissement de la cathode.

En ce qui concerne le milieu diélectrique composite 25, on peut y utiliser des nanopoudres de métaux divers. Ces poudres fines à ultrafines avec des diamètres moyens de l'ordre du nanomètre, typiquement de 1 nanomètre à 10 micromètres, de préférence 1 à 200 nanomètres, sont mélangées à un liquide diélectrique d'une viscosité prédéterminée, en général des huiles minérales ou de l'eau déionisée. La viscosité du milieu diélectrique peut être élevée en utilisant une diélectrique semi-solide sous forme de gel ou pâte.

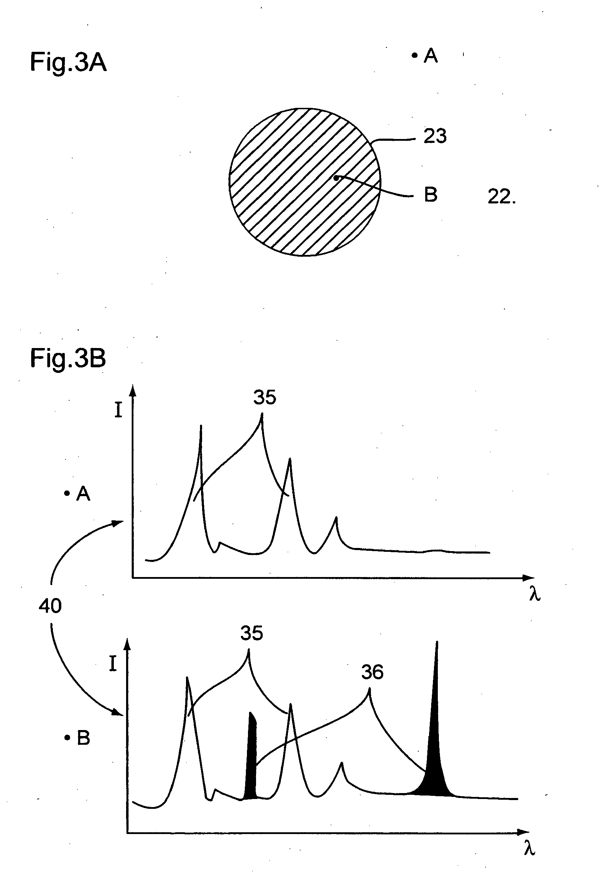

Comme les dimensions des particules des poudres sont bien inférieures à la distance pointe-surface (figure 2), ces particules sont volatilisées par la décharge et les éléments chimiques correspondants se retrouvent alors dans le plasma. Suite à l'interaction avec le plasma, ces éléments se retrouvent fixés sur les racines de l'arc à la surface du substrat. Une analyse à la microsonde ou une analyse EDX (analyse rayons X dispersive en énergie) révèle la présence de tels éléments sur le substrat à l'endroit de la décharge, ce qui constitue la signature de l'implantation, comme cela est représenté aux figures 3A et 3B. La figure 3A montre l'empreinte 23 de la microdécharge sur le substrat 22 et la figure 3B deux analyses EDX 40 effectuées aux points A et B. Ces analyses EDX révèlent les éléments constitutifs 35 du substrat au point A, et la présence supplémentaire de l'élément dopant 36, provenant du milieu diélectrique composite, au point B.

Le liquide, le gel ou la pâte diélectrique composite est donc une solution contenant des nanoparticules ou des microparticules et peut être considéré comme une encre métallurgique. En fait à la place des couleurs on peut utiliser différentes compositions avec des taux variables de différents métaux. Cette encre est choisie en fonction de la pièce à marquer, par exemple s'il s'agit d'un acier contenant du fer, du chrome et du nickel, on choisira des nanoparticules de tungstène ou de silicium. La composition chimique de la poudre est donc choisie en fonction de la composition chimique du substrat de façon à obtenir une empreinte 23 d'une composition chimique se distinguant de celle du substrat 22. Ainsi, l'association d'un métal lourd, tel que l'or, avec du silicium permet d'obtenir un alliage très dur et résistant formant l'empreinte de la marque d'identification. Une distribution homogène des nanoparticules dans le milieu diélectrique est obtenue par exemple par ajout d'un agent tensio-actif ou surfactant dans le liquide, ou gel diélectrique, tel q'un savon adéquat. Les molécules de cet agent s'organisent sur la surface des nanoparticules, annulent les attractions du type force de Van der Waals, et empêchent leur coalescence ou floculation, stabilisant le diélectrique composite. La décharge peut aussi être effectuée dans une émulsion composite tel qu'un gaz contenant des gouttelettes en suspension.

Les paramètres électriques de la décharge comme la forme de l'impulsion de courant, son intensité et sa durée, et le nombre de décharges, permettent d'obtenir différents types d'empreinte, depuis la formation d'un nouvel alliage jusqu'à la simple "soudure" de micro- ou nanoparticules sur la surface.

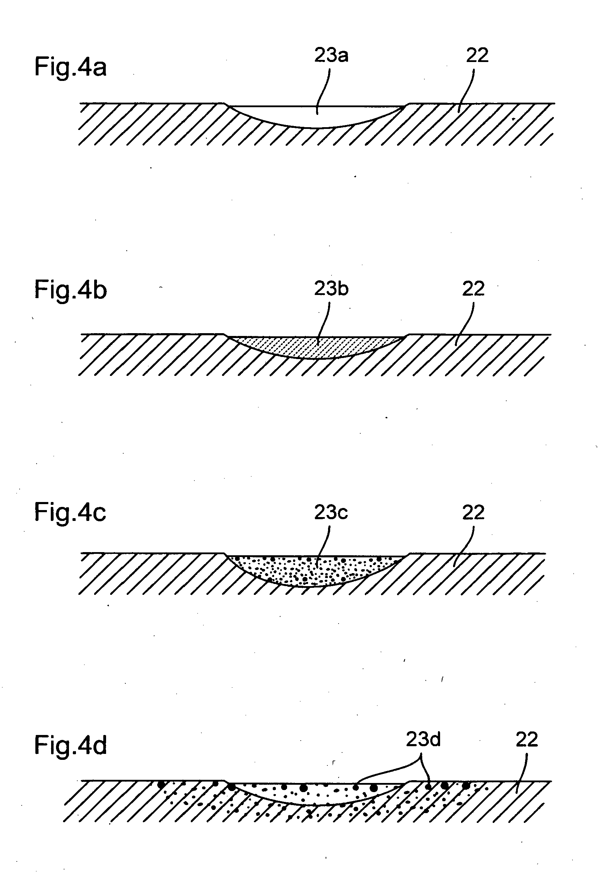

On peut ainsi citer les types d'empreintes 23 formant des marques d'identification 12 suivants en références à la figure 4 :

4a) La simple fonte du métal du substrat, sans additif quelconque, avec possible formation d'alliages amorphes 23a.
4b) La formation d'un nouvel alliage contenant au moins un nouvel élément chimique provenant du diélectrique 23b.
4c) L'implantation d'au moins un élément provenant du diélectrique dans l'alliage natif du substrat 23c.
4d) La micro-soudure ou le collage de particules 23d provenant du diélectrique. Comme le métal liquide devient pâteux puis solide, il peut capturer des éléments présents dans le diélectrique dans les instants suivant la décharge, au moment où le plasma refroidit. Cette capture peut même se faire au voisinage de l'empreinte, en bordure de la racine de l'arc, sur une couronne thermique suffisamment chaude.

Ce dernier type d'empreinte permet de capturer des particules sans les dénaturer. En particulier, des poudres ou nanopoudres devenant fluorescentes après exposition aux rayons ultraviolets, comme des sels dopés aux terres rares, peuvent ainsi être fixées, dans un but de marquage anti-contrefaçon par exemple.

La configuration en une seule décharge 28 ou plusieurs décharges successives à travers la pointe d'un microscope à sonde locale, à un emplacement bien défini, permet de contrôler tous les paramètres de la formation des empreintes 23. En particulier le gap 24 peut être ajusté au nanomètre près par des actionneurs piézoélectriques pour obtenir des empreintes reproductibles, contrairement à l'électroérosion où les décharges se produisent de façon aléatoire avec une grande variabilité du gap.

En ce qui concerne le type de décharge, il peut s'agir de la décharge d'un condensateur, ou le courant peut aussi être fourni par un générateur ad-hoc ou toute autre source de courant après le claquage du diélectrique composite. La durée de la décharge, l'amplitude du courant ainsi que la forme de l'impulsion sont optimisées pour l'implantation des ions contenus dans le diélectrique.

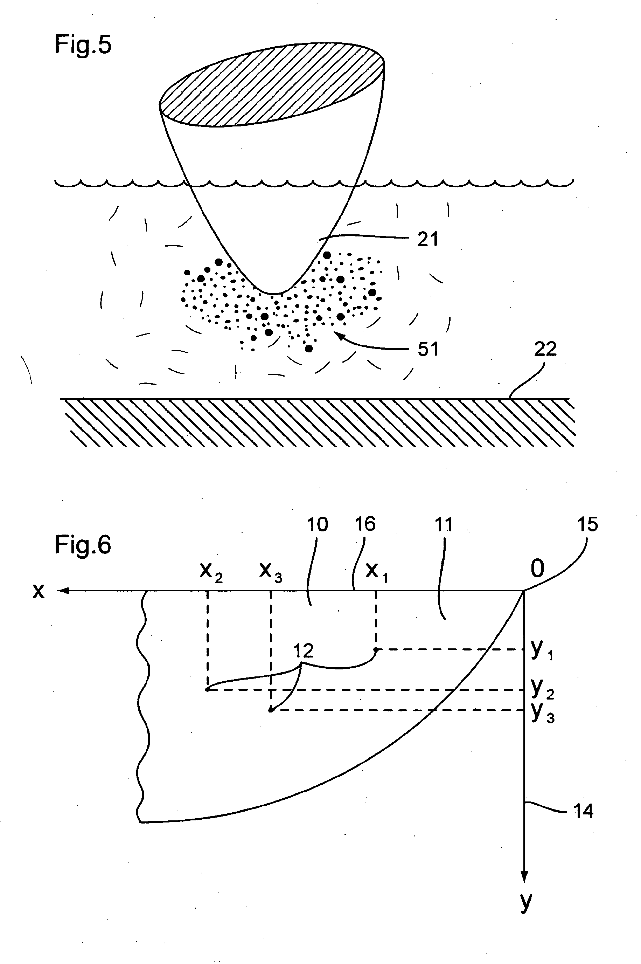

La densité du diélectrique composite, ou plutôt la concentration de dopants 36 à l'endroit de la décharge, peut être pilotée par un champ magnétique produit par une bobine se déplaçant solidairement avec la pointe 21. Un effet d'agglomération 51 contrôlé sous la pointe 21 est ainsi obtenu. Le même effet d'agglomération ou de pré-concentration peut être obtenu par attraction électrostatique vers la pointe polarisée à une tension adéquate. L'attraction peut être magnétique et/ou électrostatique. Aussi, les nanoparticules peuvent être préconcentrées sur la pointe juste avant la décharge par attraction électrostatique (figure 5). Les polarités utilisées pour l'amorçage de la décharge et pour l'entretien de la décharge peuvent être différentes.

Ainsi une marque d'identification est obtenue de la façon suivante avec le substrat et la pointe immergés dans le milieu diélectrique composite. On place la pointe 21 sur l'emplacement où on veut effectuer cette marque d'identification ou empreinte. Le positionnement précis en X-Y peut se faire par des déplacements précis d'une table X-Y et/ou de la pointe elle-même. En fait il s'agit d'un mouvement relatif de la pointe par rapport au substrat. A l'aide d'un actionneur micrométrique, mécanique ou piézoélectrique, on rentre en contact mécanique avec le substrat 22, en vérifiant par une mesure de résistance électrique par exemple. On retire ensuite la pointe à la distance voulue en fixant le gap au nanomètre près.

Ensuite on applique la tension sur la pointe 21, et après le claquage ou l'amorçage, on décharge l'énergie stockée dans un condensateur ou une autre source de courant à travers le canal de plasma 27 jusqu'à l'extinction de la décharge, ce qui produit l'empreinte 23.

Cette technique de marque d'identification ou d'authentification a l'avantage qu'elle s'adapte

- aux propriétés physiques de la pièce à marquer, comme le point de fusion, la conductivité thermique etc., cette adaptation se fait via l'énergie de la décharge;
- à l'état de surface ou la rugosité de la pièce via l'ajustage du diamètre de l'empreinte;
- à la composition chimique de la pièce à marquer via le choix du milieu diélectrique composite;
- au type d'implantation désirée par le choix de l'énergie et la forme de la décharge.

Par rapport à l'électroérosion traditionnelle, ce procédé se distingue par les faits suivants :

a) Les conditions de la décharge sont parfaitement définies, en particulier la distance de claquage (gap) et la composition physico-chimique du diélectrique dans le gap.
b) Les coordonnées X-Y de la micro-décharge sont établies avec précision. La géométrie avec une pointe fixe assure un maximum du champ électrique à un endroit bien précis.
c) Le voisinage de la décharge est reproductible. Les décharges seront en principe identiques et reproductibles. Par contre dans un gap d'électroérosion, on se trouve en présence d'un liquide en ébullition (bulles, débris, mouvement chaotique du liquide). Aussi les forces de frottement du liquide vitrifié par la pression sur la surface des électrodes sont variables d'une décharge à l'autre. Dans le cas présent la géométrie utilisée pour la décharge est toujours la même.

Cette technique permet le marquage d'objets métalliques ou semiconducteurs. Elle peut être adaptée au marquage d'objets isolants, par exemple du verre, en utilisant une contre-électrode agencée au voisinage de la pointe 21 et de la surface de l'objet.
Ce mode d'exécution pourra bien entendu également recevoir toutes autres modifications désirables.
Ainsi, la pointe pourrait former une anode et le substrat une cathode.
On pourrait prévoir le dépôt de matériaux de la pointe vers le substrat.
Le milieu diélectrique pourrait également être un gaz, tel que l'air, ou un gaz avec des particules fines en suspension, par exemple de l'acétylène avec du silicium qui serait intégré dans l'empreinte, ou encore un gel ou une pâte.
La figure 6 explique plus en détail la détermination du et des emplacements que devront occuper la ou les marques d'authentification 12.
Etant donné la taille microscopique ou nanoscopique de la ou des marques d'identification, un procédé et des moyens de repérage sont indispensables pour réaliser et pour retrouver la ou les marques d'identification à l'aide de moyens de lecture. En effet, le champ d'observation surfacique des moyens lecture est très réduit et il est de ce fait quasiment impossible de retrouver ces marques macroscopiques ou nanoscopiques si l'on ignore leurs positions.
La définition d'un système de coordonnées et le repérage des marques d'identification à l'aide de la caractéristique macroscopique constituent des éléments importants de la présente invention.
Le procédé est schématisé à la figure 6. Dans ce cas, la dernière dent du limaçon 10 est utilisée comme caractéristique macroscopique 11 pour définir un référentiel d'un système de coordonnées 14 pour réaliser d'abord, puis de lire/observer les marques d'identification 12. Une caractéristique ou un endroit particulier de cette dent est choisi et défini comme origine des coordonnées 15, ici sa pointe. L'orientation de l'axe des X du système de coordonnées sera par exemple celle de la surface droite 16 de cette dent servant de référentiel d'orientation.
Ces caractéristiques étant facilement repérables à l'aide d'un microscope optique, on positionne la pointe 21 sur l'angle vif en question, avec la plus grande précision possible. On peut alors utiliser une table X-Y micrométrique pour centrer précisément cette pointe 21. La position x, y affichée par la table X-Y correspondra à l'origine géométrique du système de coordonnées.
L'écriture et la lecture des marques d'identification 12 se fera ensuite à partir de cette origine géométrique 15 du système de coordonnées 14.
On calcule les coordonnées $x_i$, $y_i$ des emplacements que devront occuper les marques d'identification au moyen d'un calculateur à l'aide d'un algorithme de codage utilisant un moyen d'identification attribué à l'objet que l'on désire identifier ou authentifier.
Ce moyen d'identification pourra par exemple être un numéro d'identification attribué à l'objet, tel que son numéro de série ou une fraction de celui-ci. Une série de coordonnées $x_i$, $y_i$ en unité de microns correspondant aux différentes marques d'identification 12 sera alors calculée avec l'algorithme de codage qui reste secret et propriété de l'utilisateur.
Ce système d'adressage peut utiliser par exemple des coordonnées rectangulaires. Des formules mathématiques permettent de calculer, à partir du numéro de série N ou de toute autre référence déterminée par l'utilisateur, une série de n point $x_i$, $y_i$.
Les formules sont déterminées ou en tout cas connues et gardées confidentielles par l'utilisateur.
Selon un exemple très simple, les coordonnées sont déterminées avec la formule EXCEL suivante :

$$X1 = \text{ARRONDI.INF}(\text{MOD}(\text{constante } x, y + \text{Numéro de série}; 100); 0)*10$$

Selon une autre variante, chaque point d'une marque d'identification sert comme nouveau point de référence pour retrouver la prochaine marque.

Les marques d'identification 12 sous forme d'empreintes 23 sont alors réalisées aux emplacements dont on a calculé les coordonnées $x_i,y_i$.

Pour la vérification de l'identité ou de l'authenticité de l'objet, on obtient les coordonnées desdits emplacements par calcul et on place les moyens de lecture, tels qu'une microsonde ou un microscope électronique avec un équipement EDX (analyse rayons X dispersive en énergie) sur lesdites coordonnées et on contrôle la présence des marques d'identification sur ces emplacements.

Les grandeurs relatives et les échelles des marques représentées à la figure 6 ne correspondent, bien entendu, pas à la réalité.

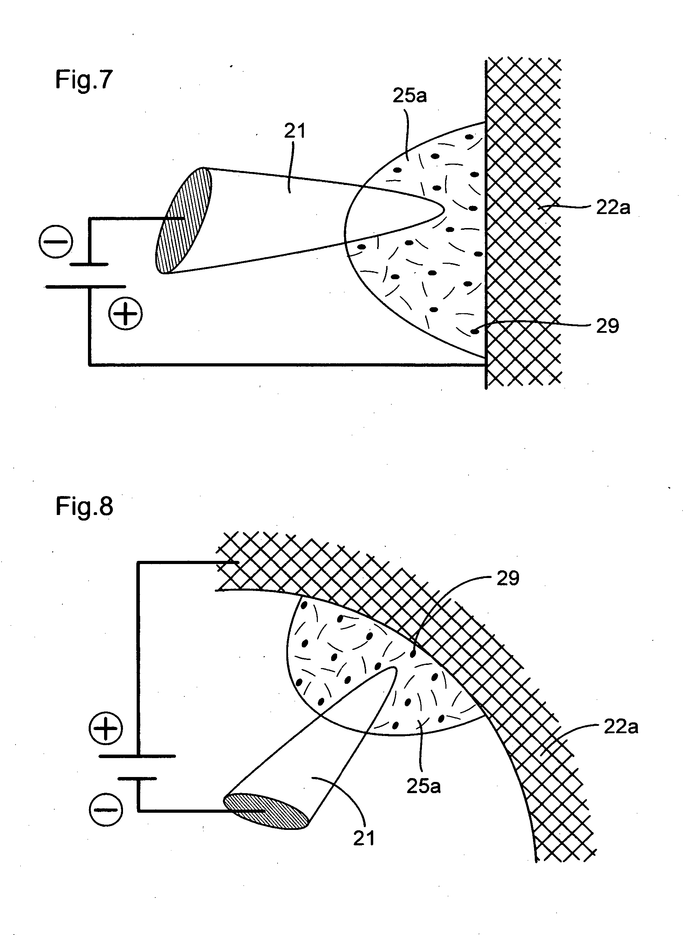

En référence aux figures 7 et 8, le milieu diélectrique peut être favorablement constitué par une substance semi-solide 25a, un gel ou une pâte. Cette substance est pure ou mélangée aux différents additifs 29 à implanter dans le substrat 22a. Ce gel ou cette pâte n'offre aucune résistance physique au déplacement vertical ou horizontal de la pointe métallique 21 utilisée pour le marquage, et de plus la plupart des gels ou pâtes à base d'hydrocarbures, comme la vaseline, sont translucides dans les épaisseurs appliquées dans cette utilisation.

Il s'agit d'utiliser, en tant que diélectrique, des gels ou des pâtes isolantes électriquement comme la vaseline, les graisses à base d'hydrocarbures, la graisse à vide. Des liquides de viscosité très élevés, comme les huiles de silicone et le polydiméthyle siloxane (PDMS), sont également utilisables à cet effet.

La viscosité de ce gel ou de cette pâte est choisie de façon que le milieu diélectrique ne s'écoule pas même disposé sur une surface inclinée ou verticale.

L'utilisation d'un gel ou d'une pâte diélectrique procure en particulier les avantages suivants :

- La solution obtenue en mélangeant de façon intime le gel ou la pâte aux différentes poudres et nanopoudres est stable et uniforme, il n'y a pas de sédimentation ni d'agglomération entre les constituants qui ne peuvent plus se déplacer librement dans le milieu diélectrique. Dans le cas du diélectrique liquide, les poudres peuvent sédimenter ou se déplacer de façon incontrôlée sur la surface de la pièce à marquer, ce qui peut nuire à l'uniformité du marquage chimique.

- Un avantage important pour l'utilisateur est l'utilisation du gel pour le marquage de surfaces complexes, verticales (figure 7), inclinées (figure 8) ou autres, où un liquide qui peut se mettre à couler n'est pas adéquat.

- Le gel ou la pâte ne s'évapore pas. Une fois appliqué, l'épaisseur reste constante ce qui est confortable pour l'utilisateur. De plus comme il ne s'étale pas, différents gels ou pâtes contenant différentes poudres peuvent être disposés simultanément de façon très proche sans formation de mélanges entre les gels. Cela permet un marquage chimique multiple sur des surfaces réduites.

- Finalement la configuration avec un diélectrique semi-solide permet d'ajouter un nombre important d'éléments chimiques différents. Une , émulsion est beaucoup plus tolérante qu'un liquide pour produire un mélange homogène de plusieurs constituants. Ainsi on pourra prévoir l'inclusion d'éléments, comme le souffre, le sélénium ou le tellure, pour réduire la tension superficielle du métal fondu et obtenir une meilleure adhésion de la marque d'identification. On pourra ajouter dans le diélectrique des éléments appropriés, comme le silicium ou le phosphore, susceptibles de favoriser la formation d'un alliage amorphe ou d'un verre métallique, beaucoup plus dur qu'un alliage ordinaire. On pourra également inclure des poudres à base de terres rares, comme l'europium ou le praséodyme. Toutes ces adjonctions peuvent être réalisées de façon simultanée dans le gel ou la pâte afin d'obtenir un mélange optimal pour une application donnée.

Il est bien entendu que les modes de réalisation décrits ci-dessus ne présentent aucun caractère limitatif et qu'ils peuvent recevoir toutes modifications désirables à l'intérieur du cadre tel que défini par la revendication 1. En particulier, au lieu d'affecter une seule décharge à un emplacement prédéterminé, on pourra effectuer deux ou davantage de décharges au même emplacement ou à des emplacements décalés du substrat.

Le marquage peut aussi être constitué par une série de marques de taille nanoscopique ou microscopique rapprochées, disposées sur la surface de façon à former une série ou un réseau périodique ou pseudo-périodique de marques. Une telle série de marques peut être identifiée convenablement par une observation de la surface à l'aide d'un système optique ou d'une sonde locale, d'une acquisition de l'image de la surface, suivie d'un traitement mathématique de l'image, par exemple un procédé d'autocorrélation. En particulier, un procédé de traitement par transformée de Fourier peut être utilisé afin de prouver la présence et la localisation des séries de marques périodiques artificielles. Ce mode d'exécution peut être réalisé même sur une surface rugueuse où l'identification individuelle de marques nanoscopiques isolées peut être problématique.

En outre, le marquage peut être constitué par une série de décharges permettant de modifier la composition physico-chimique d'une fraction de la surface de l'objet à marquer.

Aussi, des marques microscopiques de composition physico-chimique particulière peuvent être convenablement dissimulées sur une surface présentant une rugosité identique à celle qui serait produite si des marques identiques, non-dopées sans altération de la composition chimique, seraient présentes sur toute la surface à une large échelle.

Par exemple, de façon avantageuse, le marquage chimique par composition différenciée peut être fait sur une surface usinée par électro-érosion. Les marques d'identification seraient ainsi bien dissimulées sur une telle surface et seraient pratiquement introuvables sans une clé de codage géométrique.

En outre, le procédé peut être utilisé pour marquer une pièce intermédiaire, destinée à produire par réplication un grand nombre d'objets identiques portant des marques microscopiques. En particulier, le procédé peut être appliqué sur la surface d'un moule afin de permettre la production de micro-protubérances sur des pièces moulées.

Le marquage peut également se faire sur un emplacement donné par une ou par plusieurs décharges successives. Ainsi, une deuxième décharge au même endroit peut modifier, voire améliorer la qualité de l'implantation de la marque. Le type de pulse électrique, la polarité, ou encore la distance pointe-surface peuvent aussi varier entre les décharges successives. On pourra également superposer les décharges partiellement, en effectuant un déplacement micrométrique latéral avec la pointe, dans le but de créer une géométrie particulière.

On pourra en variante effectuer des déplacements latéraux de la pointe pendant la décharge dans le but de créer des figures géométriques particulières, comme des traits géométriques ou encore des symboles ou des lettres. Dans ce cas l'arc peut être maintenu pendant plusieurs secondes, voire davantage.

Le marquage peut être produit directement sur la surface de l'objet à identifier ou authentifier ou sur la surface d'une plaquette servant de substrat, cette plaquette étant fixée par tous moyens adéquats sur l'objet à identifier.

En ce qui concerne le milieu diélectrique, un liquide, un gel ou une pâte offre une concentration moléculaire élevée, appropriée pour la création d'un plasma dense. En même temps, le milieu liquide ou gélatineux permet à la pointe-électrode de rester mobile sur la surface à marquer.

Comme liquide ou gel, on pourra utiliser :

- des huiles ou graisses minérales, de l'eau dé-ionisée ou de la vaseline, ou tout autre liquide ou gel diélectrique possédant les propriétés diélectriques requises pour obtenir un claquage.
- des liquides ou gels diélectriques dont les molécules contiennent comme éléments constitutifs le ou les éléments qu'on souhaite implanter dans la surface de la pièce à marquer. Par exemple, si l'on souhaite implanter du silicium on utilisera de l'huile de silicone ou de la graisse siliconée. Mais en général, on pourra utiliser tout autre liquide ou gel de composition moléculaire appropriée allant jusqu'à des molécules très longues comme celles des cristaux liquides. Le choix de la composition moléculaire assure la présence des ions souhaités pour l'implantation dans le plasma de la décharge.
- Ces mêmes liquides ou gels contenant des poudres en suspension (émulsions).

L'utilisation d'un diélectrique liquide ou semi-solide permet de rajouter, en plus des éléments destinés au marquage chimique, d'autres additifs qui peuvent eux favoriser le claquage du diélectrique sous l'effet du champ électrique appliqué, phénomène tout aussi important pour cette application. En effet, l'inclusion de microparticules métalliques ou semiconductrices d'un diélectrique réduit de façon considérable la résistance au claquage sous l'effet d'un champ électrique. Mais l'effet est d'autant plus prononcé si les inclusions ont la forme de fibres avec un très grand rapport longueur/diamètre. Dans le cadre de cette application, il est essentiel d'obtenir un claquage du diélectrique lorsqu'on applique une tension électrique sur la pointe. Ce claquage se produit de toute façon si on approche suffisamment la pointe de la surface, même dans un diélectrique non-dopé. Cependant, pour certaines applications de marquage il est préférable de rester à une certaine distance de la surface en termes de microns, soit pour diminuer le risque d'un collage ou d'une soudure de la pointe sur la surface, soit pour augmenter la masse de plasma ou quantité de matière volatilisée par la décharge. Le point clé est que les inclusions filiformes ne doivent pas perturber le dosage chimique effectué sur le diélectrique, c'est-à-dire avoir une masse négligeable. De telles inclusions sont par exemple connues sous les noms de "nanotubes" ou "nanorods". Initialement découverts pour l'élément carbone, les nanorods et nanotubes existent maintenant pour une large gamme d'éléments comme le Cu, le Mo, l'Ag, le Pb ou des composés comme des oxydes $WO_3$, $MoO_3$. Dans le cas des nanotubes de carbone, leurs dimensions peuvent atteindre quelques nanomètres de diamètre, pour plusieurs dizaines de microns de longueur. Des rapports longueur/diamètre de l'ordre de 100000 sont courants et peuvent même atteindre 500000. De telles particules favorisent considérablement le claquage du diélectrique à des distances confortables de la surface. L'utilisation de nanotubes de carbone d'une longueur déterminée est donc aussi un moyen permettant d'ajuster la distance de claquage. Un diélectrique composite contenant les éléments dopants ainsi que des nanotubes et/ou des nanorods constitue donc un milieu diélectrique composite très adéquat pour l'utilisation de la présente invention.

L'invention s'applique non seulement à l'authentification d'objets tels que des objets de valeurs, mais également au marquage pour l'identification d'objets permettant le suivi de pièces ou de lots de fabrication, le contrôle de qualité ou toute autre activité en rapport avec la traçabilité d'objets. Ce marquage est particulièrement adéquat pour marquer des pièces critiques de façon systématique. On assure de la sorte le suivi de différents lots de fabrication. La nature microscopique ou nanoscopique du marquage respecte l'intégrité physique et fonctionnelle de la pièce à marquer, car il y a absence de contact physique entre la pointe et la pièce. La seule force exercée sur l'objet à marquer vient de la pression du micro-plasma.

Les empreintes dopées chimiquement pourront atteindre des dimensions de quelques centaines de microns, et pourront aussi être disposées en mosaïque de façon à former des figures décoratives sur la surface des objets à marquer, en plus de leur rôle de marques d'authentification.

L'utilisation d'une couche mince sacrificielle pourra être prévue pour assurer la présence de l'élément dopant. Un film métallique fin, déposé au préalable sur le substrat, est alors utilisé pour fournir l'élément dopant. La micro-décharge va fondre ce film et le mélanger à l'alliage natif sous-jacent.

Un objet déjà recouvert d'une couche métallique, par exemple un bijou rhodié, pourra être marqué en pratiquant une ouverture par micro-décharge dans le revêtement. L'analyse EDX révélera alors la présence de l'alliage de base qu'à l'endroit du marquage.

La plage des tensions électriques à utiliser pour provoquer le claquage du diélectrique peut être étendue de 1V à 400V. L'effet de pointe permet de descendre la tension pour obtenir un champ électrique local suffisamment élevé permettant de provoquer le claquage à l'endroit précis.

## Revendications

1. Procédé de marquage d'un objet comprenant l'apposition d'au moins une marque d'identification à au moins un emplacement d'un substrat (22) de cet objet, ladite marque d'identification (12) étant obtenue en appliquant une tension entre une électrode (21) et ledit substrat (22) pour produire au moins un claquage ou décharge électrique (28) pour former un canal de plasma ionisé conducteur (27) entre l'électrode (21) et le substrat (22), l'électrode (21) étant séparée du substrat (22) par une distance prédéterminée (24) ou gap occupé par un milieu diélectrique (25) dans lequel la décharge se produit et en déchargeant ensuite un courant électrique à travers le canal de plasma ionisé conducteur (27) formé entre l'électrode (21) et le substrat (22) suite à la décharge électrique (28), ledit courant électrique formant un arc électrique entre l'électrode (21) et le substrat (22), **caractérisé par le fait que** le milieu diélectrique (25) est un milieu diélectrique composite (25) constitué par un fluide diélectrique contenant en outre un ou des éléments chimiques qui sont destinés à être implantés dans ledit substrat (22) ; et **par le fait que** la tension, la durée de la décharge, le gap et le courant électrique sont paramétrés pour provoquer la fonte du substrat (22) à la base de l'arc et la fonte d'au moins un élément chimique du milieu diélectrique composite (25) dans le canal de plasma ionisé conducteur (27) et pour que suite à l'interaction avec le plasma du canal de plasma ionisé conducteur (27), ledit au moins un éléments chimique du milieu diélectrique composite (25) se fixe sur le substrat (22) afin d'obtenir au moins une empreinte (23) présentant une composition chimique particulière située audit emplacement, cette empreinte (23) formant la marque d'identification (12) étant repérable par des moyens de lecture (40).

2. Procédé selon la revendication 1, **caractérisé par le fait que par le fait que** la tension, la durée de la décharge, le gap et le courant électrique sont paramétrés pour que suite à l'interaction avec le plasma, un nouvel alliage est formé à la base de l'arc, différent de l'alliage natif du substrat (22) de l'objet, ledit nouvel alliage contenant au moins un élément chimique provenant du milieu diélectrique composite (25).

3. Procédé selon la revendication 1, **caractérisé par le fait que par le fait que** la tension, la durée de la décharge, le gap et le courant électrique sont paramétrés pour que suite à l'interaction avec le plasma, au moins un élément chimique provenant du milieu diélectrique composite (25) est implanté dans l'alliage natif du substrat (22) à la base de l'arc.

4. Procédé selon la revendication 1, **caractérisé par le fait que le fait que** la tension, la durée de la décharge, le gap et le courant électrique sont paramétrés pour que suite à l'interaction avec le plasma, au moins un élément chimique provenant du milieu diélectrique composite (25) est micro-soudé ou collé dans le substrat (22) à la base ou au voisinage de l'arc.

**5.** Procédé selon l'une des revendications précédentes, **caractérisé par le fait que** l'empreinte (23) est produite sur la surface même de l'objet à authentifier formant le substrat (22).

**6.** Procédé selon l'une des revendications précédentes, **caractérisé par le fait que** le milieu diélectrique composite (25) comprend au moins une poudre à granulométrie plus fine que le gap mélangée à un liquide, un gel ou une pâte diélectrique, la composition chimique de la poudre étant choisie en fonction de la composition chimique du substrat de façon à obtenir une empreinte (23) d'une composition chimique se distinguant de celle du substrat (22).

**7.** Procédé selon l'une des revendications précédentes, **caractérisé par le fait que** l'électrode (21) forme une cathode et le substrat (22) une anode ou l'inverse.

**8.** Procédé selon l'une des revendications précédentes, **caractérisé par le fait que** l'électrode (21) est constituée en métal réfractaire ayant un point de fusion élevé et/ou des propriétés d'émission thermoïonique, cette électrode étant la pointe d'un microscope à sonde locale ou l'extrémité d'un fil.

**9.** Procédé selon l'une des revendications 1 à 8, **caractérisé en ce que** la marque d'identification (12) est obtenue

- en plaçant l'électrode (21) sur ledit emplacement, le substrat (22) et l'électrode (21) étant immergés dans le milieu diélectrique (25),
- en obtenant un contact mécanique entre l'électrode (21) et le substrat (22) au moyen d'un actionneur micrométrique, mécanique ou piézoélectrique en contrôlant le contact avantageusement par une mesure de résistance électrique,
- en séparant l'électrode (21) et le substrat (22) du gap prédéterminé,
- en appliquant une tension entre l'électrode (21) et le substrat (22) et, après l'amorçage d'une décharge, en déchargeant l'énergie provenant d'un condensateur ou d'une source de courant à travers le canal de plasma ionisé (27).

**10.** Procédé selon l'une des revendications précédentes, **caractérisé par le fait que** l'on détermine au moyen d'une microsonde ou d'un équipement EDX, formant lesdits moyens de lecture, la composition chimique de l'empreinte (23) par rapport à celle du substrat (22) de manière à vérifier l'identité de l'objet.

**11.** Procédé selon l'une des revendications précédentes, **caractérisé par le fait que** l'on détermine sur le substrat (22) au moins une caractéristique macroscopique (11) repérable par des moyens optiques,

- que l'on définit un endroit particulier (12) de la caractéristique macroscopique (11) pour servir de référentiel et d'origine géométrique (15) d'un système de coordonnées (14),
- que l'on calcule les coordonnées $(x_i, y_i)$ d'un ou des emplacements que devront occuper la ou les marques d'identification (12) à l'aide d'un algorithme de codage utilisant un moyen d'identification attribué à l'objet,
- que l'on réalise la ou les marques d'identification (12) à l'emplacement dont les coordonnées $(x_i, y_i)$ ont été calculées, ces marques d'identification étant non repérables à l'oeil nu, mais repérables à l'aide de moyens de lecture,
- que l'on vérifie l'identité dudit objet en obtenant les coordonnées $(x_i, y_i)$ de l'emplacement de la ou des marques d'identification (12) et en plaçant les moyens de lecture sur lesdites coordonnées afin de contrôler la présence de la ou des marques d'identification (12) sur le ou les emplacements.

**12.** Procédé selon l'une des revendications précédentes, **caractérisé par le fait que** l'on effectue une série de marques d'identification (12) formant un réseau de marques susceptibles d'être identifiés par lesdits moyens de lecture, suivi d'un traitement mathématique, favorablement par transformée de Fourier.

**13.** Procédé selon l'une des revendications précédentes, **caractérisé par le fait que** l'on utilise en tant que milieu diélectrique un gel ou une pâte dont la viscosité est telle que le milieu diélectrique ne s'écoule pas même disposé sur une surface inclinée ou verticale.

**14.** Procédé selon l'une des revendications précédentes, **caractérisé par le fait que** le milieu diélectrique comprend des inclusions de microparticules sous forme de fibres destinées à réduire la résistance au claquage sous l'effet d'un champ électrique, ces fibres étant favorablement constituées par des nanotubes.

**Patentansprüche**

1. Verfahren zur Markierung eines Objekts, das das Anbringen von mindestens einer Identifikationsmarke an mindestens einer Stelle eines Substrats (22) dieses Objekts umfasst, wobei die Identifikationsmarke (12) durch Anlegen einer Spannung zwischen einer Elektrode (21) und dem Substrat (22) zum Erzeugen mindestens eines Durchschlags oder einer elektrischen Entladung (28) zum Bilden eines leitfähigen ionisierten Plasmakanals (27) zwischen der Elektrode (21) und dem Substrat (22), wobei die Elektrode (21) von dem Substrat (22) durch einen vorbestimmten Abstand (24) oder Spalt getrennt ist, der durch ein dielektrisches Mittel (25) eingenommen wird, in dem die Entladung sich ereignet, und durch anschließendes Entladen eines elektrischen Stromes durch den leitfähigen ionisierten Plasmakanal (27) erhalten wird, der zwischen der Elektrode (21) und dem Substrat (22) im Anschluss an die elektrische Entladung (28) gebildet wird, wobei der elektrische Strom einen Lichtbogen zwischen der Elektrode (21) und dem Substrat (22) bildet, **dadurch gekennzeichnet, dass** das dielektrische Medium (25) ein dielektrisches Verbundmedium (25) ist, das aus einem dielektrischen Fluid besteht, das ferner ein oder mehrere chemische Elemente enthält, die dazu bestimmt sind, in das Substrat (22) implantiert zu werden; und dadurch, dass die Spannung, die Dauer der Entladung, der Spalt und der elektrische Strom parametrisiert sind, um das Schmelzen des Substrats (22) an der Basis des Lichtbogens und das Schmelzen von mindestens einem chemischen Element des dielektrischen Verbundmediums (25) im leitfähigen ionisierten Plasmakanal (27) zu bewirken, und damit infolge der Interaktion mit dem Plasma des leitfähigen ionisierten Plasmakanals (27) das mindestens eine chemische Element des dielektrischen Verbundmediums (25) sich am Substrat (22) fixiert, um mindestens einen Abdruck (23) zu erhalten, der eine bestimmte chemische Zusammensetzung aufweist, die sich an der Stelle befindet, wobei dieser Abdruck (23) die Identifikationsmarke (12) bildet, die durch Lesemittel (40) erkennbar ist.

2. Verfahren nach Anspruch 1, **dadurch gekennzeichnet, dass** die Spannung, die Dauer der Entladung, der Spalt und der elektrische Strom parametrisiert sind, damit infolge der Interaktion mit dem Plasma eine neue Legierung an der Basis des Lichtbogens gebildet wird, die sich von der ursprünglichen Legierung des Substrats (22) des Objekts unterscheidet, wobei die neue Legierung mindestens ein chemisches Element enthält, das von dem dielektrischen Verbundmedium (25) stammt.

3. Verfahren nach Anspruch 1, **dadurch gekennzeichnet, dass** die Spannung, die Dauer der Entladung, der Spalt und der elektrische Strom parametrisiert sind, damit infolge der Interaktion mit dem Plasma mindestens ein chemisches Element, das von dem dielektrischen Verbundmedium (25) stammt, in die ursprüngliche Legierung des Substrats (22) an der Basis des Lichtbogens implantiert wird.

4. Verfahren nach Anspruch 1, **dadurch gekennzeichnet, dass** die Spannung, die Dauer der Entladung, der Spalt und der elektrische Strom parametrisiert werden, damit infolge der Interaktion mit dem Plasma mindestens ein chemisches Element, das von dem dielektrischen Verbundmedium (25) stammt, in das Substrat (22) an der Basis oder in der Nähe des Lichtbogens mikrogeschweißt oder geklebt wird.

5. Verfahren nach einem der vorhergehenden Ansprüche, **dadurch gekennzeichnet, dass** der Abdruck (23) auf der Fläche des zu authentifizierenden Objekts selbst, das das Substrat (22) bildet, hergestellt wird.

6. Verfahren nach einem der vorhergehenden Ansprüche, **dadurch gekennzeichnet, dass** das dielektrische Verbundmedium (25) mindestens ein Pulver mit feinerer Korngröße als der mit einer/einem dielektrischen Flüssigkeit, Gel oder Paste gemischte Spalt umfasst, wobei die chemische Zusammensetzung des Pulvers derart in Abhängigkeit von der chemischen Zusammensetzung des Substrats gewählt wird, dass ein Abdruck (23) mit einer chemischen Zusammensetzung erhalten wird, die sich von derjenigen des Substrats (22) unterscheidet.

7. Verfahren nach einem der vorhergehenden Ansprüche, **dadurch gekennzeichnet, dass** die Elektrode (21) eine Kathode und das Substrat (22) eine Anode bildet oder umgekehrt.

8. Verfahren nach einem der vorhergehenden Ansprüche, **dadurch gekennzeichnet, dass** die Elektrode (21) aus feuerfestem Metall gebildet ist, das einen hohen Schmelzpunkt und/oder Thermoionenemissionseigenschaften aufweist, wobei diese Elektrode die Spitze eines Mikroskops mit lokaler Sonde oder das Ende eines Drahtes ist.

9. Verfahren nach einem der Ansprüche 1 bis 8, **dadurch gekennzeichnet, dass** die Identifikationsmarke (12) durch Folgendes erhalten wird:

   - Unterbringen der Elektrode (21) an der Stelle, wobei das Substrat (22) und die Elektrode (21) in das dielektrische Medium (25) getaucht werden,
- Erhalten eines mechanischen Kontakts zwischen der Elektrode (21) und dem Substrat (22) mittels eines mikrometrischen, mechanischen oder piezoelektrischen Stellglieds durch Kontrollieren des Kontakts vorzugsweise durch eine Messung des elektrischen Widerstands,
- Trennen der Elektrode (21) und des Substrats (22) um den vorbestimmten Spalt,
- Anlegen einer Spannung zwischen der Elektrode (21) und dem Substrat (22) und, nach dem Einsetzen einer Entladung, Entladen der Energie, die von einem Kondensator oder einer Stromquelle stammt, durch den ionisierten Plasmakanal (27).

**10.** Verfahren nach einem der vorhergehenden Ansprüche, **dadurch gekennzeichnet, dass** mittels einer Mikrosonde oder einer EDX-Ausrüstung, die die Lesemittel bilden, die chemische Zusammensetzung des Abdrucks (23) derart im Vergleich zu derjenigen des Substrats (22) bestimmt wird, dass die Identität des Objekts geprüft wird.

**11.** Verfahren nach einem der vorhergehenden Ansprüche, **dadurch gekennzeichnet, dass** auf dem Substrat (22) mindestens eine makroskopische Eigenschaft (11) bestimmt wird, die durch optische Mittel erkennbar ist,

- dass eine bestimmte Stelle (12) der makroskopischen Eigenschaft (11) definiert wird, um als Bezugssystem und geometrischer Ursprung (15) eines Koordinatensystems (14) zu dienen,
- dass die Koordinaten ($x_i$, $y_i$) von einer oder mehreren Stellen, die die eine oder die mehreren Identifikationsmarken (12) einnehmen sollen, mittels eines Codierungsalgorithmus berechnet werden, der ein Identifikationsmittel verwendet, das dem Objekt zugewiesen ist,
- dass das oder die Identifikationsmarken (12) an der Stelle ausgeführt werden, deren Koordinaten ($x_i$, $y_i$) berechnet wurden, wobei diese Identifikationsmarken nicht mit bloßem Auge erkennbar sind aber mittels Lesemitteln erkennbar sind,
- dass die Identität des Objekts durch Erhalten der Koordinaten ($x_i$, $y_i$) der Stelle der einen oder der mehreren Identifikationsmarken (12) und durch Unterbringen der Lesemittel auf den Koordinaten geprüft wird, um das Vorhandensein der einen oder der mehreren Identifikationsmarken (12) an der oder den Stellen zu kontrollieren.

**12.** Verfahren nach einem der vorhergehenden Ansprüche, **dadurch gekennzeichnet, dass** eine Reihe von Identifikationsmarken (12) ausgeführt wird, die ein Netz von Marken bilden, die durch die Lesemittel identifiziert werden können, worauf eine mathematische Verarbeitung, vorzugsweise durch Fourier-Transformation, folgt.

**13.** Verfahren nach einem der vorhergehenden Ansprüche, **dadurch gekennzeichnet, dass** als dielektrisches Medium ein Gel oder eine Paste verwendet wird, dessen/deren Viskosität derart ist, dass das dielektrische Medium noch nicht einmal fließt, wenn es auf einer geneigten oder vertikalen Fläche angeordnet ist.

**14.** Verfahren nach einem der vorhergehenden Ansprüche, **dadurch gekennzeichnet, dass** das dielektrische Medium Einschlüsse von Mikropartikeln in der Form von Fasern umfasst, die dazu bestimmt sind, die Spannungsfestigkeit unter der Wirkung eines elektrischen Feldes zu verringern, wobei diese Fasern vorzugsweise aus Nanoröhrchen bestehen.

**Claims**

**1.** Process of marking of an object comprising the affixing of at least one identifying mark to at least one site of a substrate (22) of this object, this identifying mark (12) being obtained by applying a voltage between an electrode (21) and the said substrate (22) to produce at least one breakdown or electric discharge (28) to form an conducting ionized plasma canal (27) between the electrode (21) and the substrate (22), the electrode (21) being separated from the substrate (22) by a predetermined distance (24) or gap occupied by a dielectric medium (25) in which the discharge is produced and by discharging an electric current through the conducting ionized plasma canal (27) formed between the electrode (21) and the substrate (22) following the electric discharge (28), the said electric current forming an electric arc between the electrode (21) and the substrate (22), **characterized in that** the dielectric medium (25) is a composite dielectric medium (25) constituted by a dielectric fluid which contains one or several chemical elements intended to be implanted in said substrate (22); and by the fact that the voltage, the duration of the discharge, the gap and the electric current are configured to induce the melting of the substrate (22) at the base of the arc and the melting of at least one chemical element of the composite dielectric medium (25) in the conducting ionized plasma canal (27), and so that, following the interaction with the plasma of the conducting ionized plasma canal (27), the said at least one chemical element of the composite dielectric medium (25) fixes itself on the substrate (22) to obtain at least one impression (23) presenting a peculiar chemical composition and situated at the said site, this impression (23) forming the identifying mark (12) and able to be recovered by means of reading (40).

2.  Process according to claim 1, **characterized in that** the voltage, the duration of the discharge, the gap and the electric current are configured so that, following the interaction with the plasma, a new alloy is formed at the base of the arc, distinct from the native alloy of the substrate (22) of the object, the said new alloy containing at least one chemical element coming from the composite dielectric medium (25).

3.  Process according to claim 1, **characterized in that** the voltage, the duration of the discharge, the gap and the electric current are configured so that, following the interaction with the plasma, at least one chemical element coming from the composite dielectric medium (25) is implanted into the native alloy of the substrate (22) at the base of the arc.

4.  Process according to claim 1, **characterized in that** the voltage, the duration of the discharge, the gap and the electric current are configured so that, following the interaction with the plasma, at least one chemical element coming from the composite dielectric medium (25) is micro-welded or bonded into the substrate (22) at the base or in the neighborhood of the arc.

5.  Process according to any of the preceding claims, **characterized in that** the impression (23) is produced directly on the surface of the object to be identified and forming the substrate (22).

6.  Process according to any of the preceding claims, **characterized in that** the composite dielectric medium (25) comprises at least one powder that has a finer grain size distribution than the gap mixed with a dielectric liquid, gel, or paste, the chemical composition of the powder having been selected as a function of the chemical composition of the substrate so as to obtain an impression (23) of a chemical composition distinguishing it from that of the substrate (22).

7.  Process according to one of the preceding claims, **characterized in that** the electrode (21) forms a cathode, and the substrate (22) forms an anode or the inverse.

8.  Process according to one of the preceding claims, **characterized in that** the electrode (21) consists of a refractory metal having an elevated melting point and/or thermionic emission properties, the electrode being the pointe of a local-probe microscope or the end of a wire.

9.  Process according to one of claims 1 to 8, **characterized in that** the identifying mark (12) is obtained

    - by placing the electrode (21) on said site, the substrate (22) and the point (21) being immersed into the dielectric medium (25),
    - by obtaining a mechanical contact between the point (21) and the substrate (22) by means of a micrometric, mechanical, or piezoelectric actuator, when controlling the contact advantageously by the measurement of electric resistance,
    - by separating the electrode (21) and the substrate (22) by a predetermined gap,
    - by applying a voltage between the electrode (21) and the substrate (22), and after breakdown of a discharge, discharging the energy coming from a condenser or source of current through the ionized plasma canal (27).

10. Process according to one of the preceding claims, **characterized in that** one determines by means of a microprobe or EDX equipment that form said means of reading, the chemical composition of the impression (23) relative to that of the substrate (22) in order to verify the identity of the object.

11. Process according to one of the preceding claims, **characterized in that** one determines on the substrate (22) at least one macroscopic characteristic (11) that can be referenced by optical means,

    - that one defines a particular spot (12) of the macroscopic characteristic (11), to serve as a reference point and geometric origin (15) or a system of coordinates (14),
    - that one calculates the coordinates $(x_i, y_i)$ of the emplacement or emplacements that should be occupied by the identifying mark or marks (12) with the aid of a coding algorithm using a means of identification attributed to the object,
    - that one realizes the identification mark or marks (12) at the sites where the coordinates $(x_i, y_i)$ have been

calculated, these marks of identification being not able to be referenced by the naked eye but by means of reading,

that one verifies the identity of said object by obtaining the coordinates (xi, yi) of the emplacement of the identifying mark or marks (12), and by placing the means of reading on said coordinates in order to control the presence of the identifying mark or marks (12) on the site or sites.

12. Process according to one of the preceding claims, **characterized in that** one accomplishes a series of identifying marks (12) forming a network of marks susceptible of being identified by said means of reading, followed by a mathematical treatment that favorably is a Fourier treatment.

13. Process according to one of the preceding claims, **characterized in that** one uses as a dielectric medium a gel or paste having a viscosity such that the dielectric medium will not flow out even when disposed on an inclined or vertical surface.

14. Process according to one of the preceding claims, **characterized in that** the dielectric medium comprises additions of microparticles in the form of fibers intended to reduce the resistance to breakdown under the action of an electric field, these fibers favorably consisting of nanotubes.

## Fig.1

## Fig.2

Fig.3A

Fig.3B

Fig.4a

23a          22

Fig.4b

23b          22

Fig.4c

23c          22

Fig.4d

23d          22

Fig.5

Fig.6

Fig.7

Fig.8

**EP 2 040 869 B1**

**RÉFÉRENCES CITÉES DANS LA DESCRIPTION**

**Documents brevets cités dans la description**

- FR 2556639